# EUROPEAN PATENT APPLICATION

(11) **EP 4 793 907 A1**
(43) Date of publication of application: **19.08.2026**
(21) Application number: 25207166.7
(22) Date of filing: 07.10.2025
(51) Int. Cl.: G06V 20/62

(54) **METHOD FOR ESTABLISHING TIRE INFORMATION RECOGNITION MODEL, TIRE INFORMATION RECOGNITION METHOD AND SYSTEM**

(30) Priority: 13.02.2025 CN 202510159154
(71) Applicant: Getac Technology Corporation, New Taipei City 221009 (TW)
(72) Inventor: PENG, Chang-Jan, 11568 Taipei City (TW); CHENG, Ming-Che, 11568 Taipei City (TW); WANG, Chen-Tai, 11568 Taipei City (TW); TSAI, Chih-Hao, 11568 Taipei City (TW)
(74) Representative: Viering, Jentschura & Partner mbB Patent- und Rechtsanwälte

(57) **Abstract**

A method for establishing a tire information recognition model, a tire information recognition method, and a tire information recognition system (100). In the method for establishing the model, images of tire side surfaces taken from various angles are obtained for creating a tire image training dataset. Positions of the tires (200) are identified from each of the images, and a tire image (60) can be segmented from the images for generating a tire image set. A fixed tire image set is obtained through geometry fixing. An object detection model is used to detect objects in each of the images in the fixed tire image set. Multiple regions of interest can be created in each of the images, and the regions of interest are labeled so as to form a labeled tire image training dataset used to train the object detection model in order to establish the tire information recognition model.

## Description

### FIELD OF THE INVENTION

The present invention relates to an artificial intelligence technology for recognizing tire information, and more particularly to a method for establishing an artificial intelligence implemented (AI-implemented) tire information recognition model, a tire information recognition method by applying the tire information recognition model, and a tire information recognition system.

### BACKGROUND OF THE INVENTION

When tires for various vehicles are replaced, operators need to confirm the specifications of each of the vehicle tires before fetching the corresponding tires for replacement. Conventional methods generally rely on the texts and patterns engraved on the side surface of the tires to recognize a variety of tire information of each of the tires. However, the tire information engraved on the side surface of the tires becomes difficult to be recognized using the conventional methods after the tires are used for a long period of time. Further, manual interpretation of the tire information using the conventional methods is prone to error due to the diversity of the tires and inconsistent positioning of the information engraved on the tires.

As discussed above, a method for efficiently recognizing tire specification information is needed. Since the various specifications of information engraved on the side surface of the tires are conventionally recognized through manual interpretation, the conventional technologies can struggle when interpreting tire information under various conditions.

### SUMMARY OF THE INVENTION

For effectively and quickly recognizing tire specifications, provided in the present invention is a method for establishing a tire information recognition model, a tire information recognition method using the tire information recognition model, and a tire information recognition system that operates the methods.

In the method for establishing a tire information recognition model, images covering part of or entire side surfaces of each of tires are obtained by capturing multiple images of various angles of views of the side surfaces of tires so as to create a tire image training dataset. Next, positions of the tires can be recognized from the images. A segmentation model is used to position the tires, classify the tires according to the pixel features of the tires, and segment the tires from the multiple images by masks being created for the images. A tire image set is accordingly created. A corrected tire image set is formed when performing geometry fixing on the side surfaces of the tires. An object detection model is used to detect any object in each of the images for creating multiple regions of interest in each of the images. The regions of interest can be labeled for forming a labeled tire image training dataset. The labeled tire image training dataset is used for training the object detection model so as to establish a tire information recognition model.

After that, when geometry fixing is performed on the tire image set, the corrected tire image set is formed, in which the tire image is expanded to be a strip-shaped tire image. Specifically, a polar coordinate transformation is applied to transform a concentric circular tire image that is obtained through image segmentation into the strip-shaped tire image.

Further, the object detection model is used to detect the corrected tire image set for creating the multiple regions of interest for each of the images, in which one or any combination of regions such as a brand region, a service type region, a section width region, an aspect ratio region, a construction region, and a tire-specification region on the side surface of the tire can be labeled.

Further, the object detection model performs target detection, instance segmentation, and image classification for recognizing texts in the multiple regions of interest, labeling characters, and training the object detection model to establish the tire information recognition model having functions of object detection and optical character recognition.

Further, a classification recognition model is applied to recognize a tire brand from the brand region on the side surface of the tire, and therefore the labeled tire image training dataset can include tire brand information. The tire information recognition model with a function of brand recognition can be established by training the object detection model.

The tire information recognition model is established for recognizing tire information. In the tire information recognition method, an image under recognition that covers part of or the entire tire under recognition is captured, and a segmentation model is applied to segment a tire image from the image under recognition. After performing geometry fixing on the tire image, the corrected tire image is expanded to be an identifiable strip-shaped tire image. The identifiable strip-shaped tire image is then pre-processed for enhancing brightness and contrast of the image. Multiple regions of interest on a side surface of the tire under recognition in the identifiable strip-shaped tire image are positioned. The tire information recognition model is applied to recognize texts and patterns within the multiple regions of interest. The recognized texts and the patterns on the side surface of the tire under recognition are referred to for recognizing a tire brand and classification so as to acquire specifications of the tire under recognition.

In one aspect of the present invention, the tire information recognition system includes a computer system having a processor, a camera, and a non-transitory computer-readable medium. The processor executes a program set stored in the non-transitory computer-readable medium for applying the tire information recognition model established using the above method in order to perform the tire information recognition method.

These and other aspects of the present invention will become apparent from the following description of the embodiment taken in conjunction with the following drawings and their captions, although variations and modifications therein may be affected without departing from the spirit and scope of the novel concepts of the invention.

### BRIEF DESCRIPTION OF THE DRAWINGS

The described embodiments may be better understood by reference to the following description and the accompanying drawings, in which:
Fig. 1 is a schematic diagram depicting a system framework of a tire information recognition system according to one embodiment of the present invention;
Fig. 2 is a schematic diagram depicting a scenario having an electronic device operating the tire information recognition system according to one embodiment of the present invention;
Fig. 3 is a flowchart illustrating a method for establishing a tire information recognition model according to one embodiment of the present invention;
Fig. 4 is a flowchart illustrating a tire information recognition method according to one embodiment of the present invention;
Fig. 5 is a schematic diagram depicting an exemplary example of a tire specification according to one embodiment of the present invention;
Fig. 6A to Fig. 6D are schematic diagrams depicting a process of segmenting a tire from an image in one embodiment of the present invention;
Fig. 7 is a schematic diagram depicting a strip-shaped tire image that is obtained from a tire image through geometry fixing according to one embodiment of the present invention; and
Fig. 8 is a schematic diagram depicting an exemplary example of a strip-shaped tire image in one embodiment of the present invention.

### DETAILED DESCRIPTION OF THE EXEMPLARY EMBODIMENTS

The present invention is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a," "an", and "the" includes plural reference, and the meaning of "in" includes "in" and "on." Titles or subtitles can be used herein for the convenience of a reader, which shall have no influence on the scope of the present invention.

The present invention relates to an artificial intelligence implemented (AI-implemented) method for establishing a tire information recognition model, a tire information recognition method using the tire information recognition model, and a tire information recognition system that operates the above methods.

In certain embodiments of the present invention, the method for establishing the tire information recognition model essentially uses a deep-learning method with an optical character recognition (OCR) technology to achieve an intelligent tire information recognition function and establish the tire information recognition model. The tire information recognition model can be operated in an edge-computation device that can be a mobile electronic device. A user can hold a handheld electronic device to capture images of a side surface of a tire. The tire information recognition model operated in the electronic device is used to recognize information on the side surface of the tire.

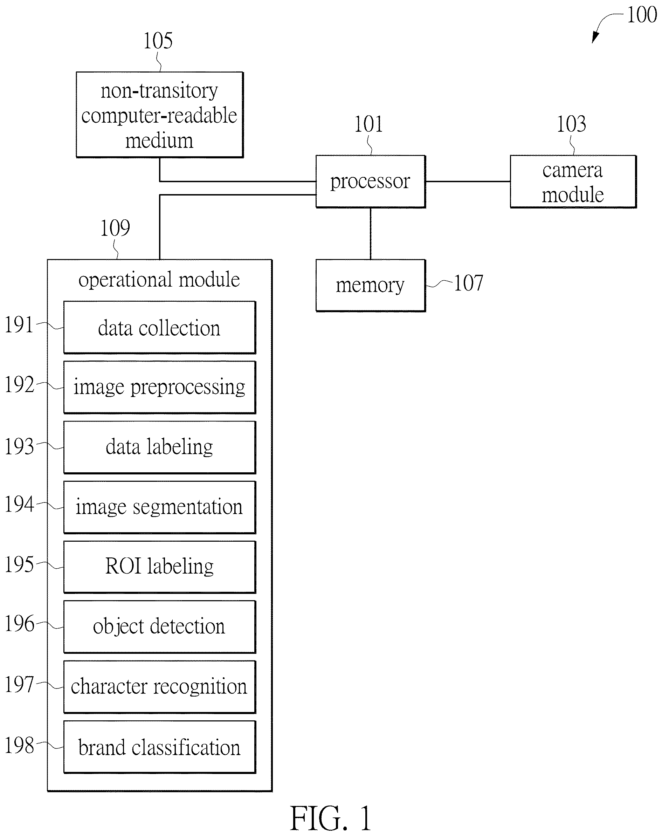

Fig. 1 is a schematic diagram depicting a framework of a tire information recognition system that operates the method for establishing a tire information recognition model and the tire information recognition method according to one embodiment of the present invention.

In certain embodiments of the present invention, the computer system implements the tire information recognition system 100 through collaboration of hardware and software. The hardware components of the tire information recognition system 100 include a processor 101, a camera module 103, a memory 107, and a non-transitory computer-readable medium 105 that is used to store a program set. The processor 101 executes the program set stored in the non-transitory computer-readable medium 105 to operate the tire information recognition model that is established by the method for establishing the tire information recognition model of the present invention. The tire information recognition model is used to perform tire information recognition.

The tire information recognition system 100 performs various software sequences for establishing a tire information recognition model for tire information recognition by an operational module 109 of a computer system. The software sequences are such as data collection 191, image preprocessing 192, data labeling 193, image segmentation 194, region of interest (ROI) labeling 195, object detection 196, character recognition 197, and brand classification 198.

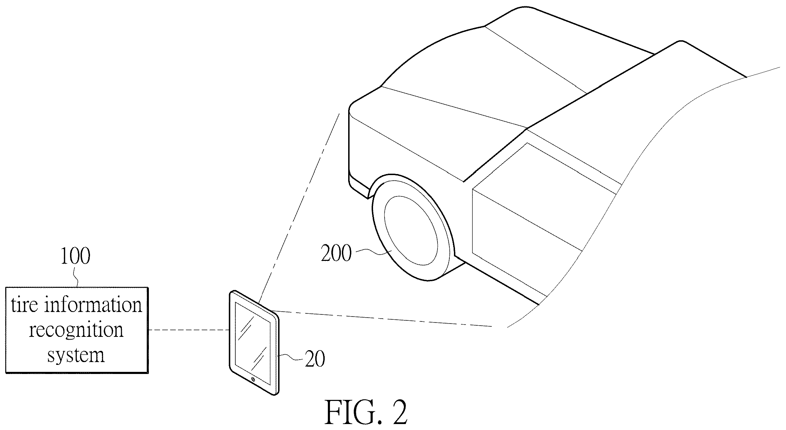

Reference is made to Fig. 2, which is a schematic diagram illustrating a circumstance where the tire information recognition system 100 is operated in one embodiment of the present invention. In one of the embodiments of the present invention, the tire information recognition system 100 can be operated in an electronic device 20, in which a processor executes a program set to establish the tire information recognition model and use the tire information recognition model to recognize tire information. Alternatively, in another embodiment of the present invention, another computer system operates the tire information recognition system 100, and the tire information recognition model is established through collaboration of hardware (e.g., the processor) and software. The tire information recognition model performs tire information recognition. Afterwards, a user manipulates the electronic device 20 to introduce the tire information recognition model from another computer system. Accordingly, the terminal, such as the electronic device 20, is able to perform tire information recognition.

According to the embodiment of the circumstance schematically shown in Fig. 2, the user is allowed to manipulate the camera module 103 of the electronic device 20 to capture an image of a tire 200 at a specific angle.

In a purpose of establishing the tire information recognition model or recognizing tire information, the tire information recognition system 100 operated in or connected with the electronic device 20 performs data collection 191, in which a camera of the electronic device 20 is used to capture images under recognition that cover part of or entire tire under recognition. These images can be processed by image preprocessing 192. The image preprocessing 192 can be performed at any step when processing the image under recognition. For example, the process of image preprocessing 192 can be performed after a strip-shaped tire image is generated. The image preprocessing 192 includes adjusting brightness, contrast, and colors of the image under recognition, correcting image distortion and deformation, or adjusting the image under recognition to be suitable for recognizing information. The tire information recognition system 100 performs data labeling 193 on the large number of images under recognition, by which the portions including the tire image of the images under recognition can be labeled and then classified to be the data set for training the models.

The tire information recognition system 100 then performs image segmentation 194. In one of the embodiments, a segmentation model is applied to segment the tire images from the images under recognition and then corrected through geometry fixing. The corrected tire images can be expanded to be identifiable strip-shaped tire images. The tire information recognition system 100 performs ROI labeling 195 on the strip-shaped tire images by, for example, an intelligent model, a specific algorithm, or manually to label the regions including tire information on the strip-shaped tire image. The system then performs object detection 196 on the regions so as to recognize the texts and patterns in each of the ROIs. After that, the system performs character recognition 197 and brand classification 198 for obtaining specifications of the tires under recognition.

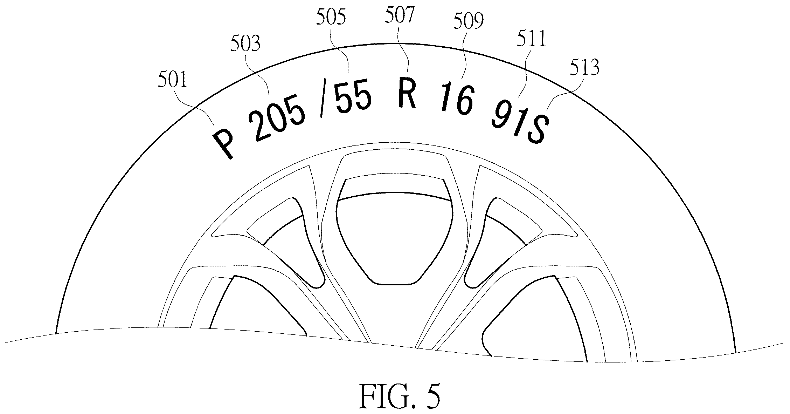

In certain embodiments of the present invention, reference is made to Fig. 2 that shows a schematic diagram of a circumstance that a user manipulates the electronic device 20 that operates or connects with the tire information recognition system 100. A camera of the electronic device 20 is used to capture images of the tire. A software sequence operated in the tire information recognition system 100 recognizes tire information and a display screen displays the specifications of the tire under recognition. For an exemplary example of the tire information displayed on the display screen, reference can be to Fig. 5.

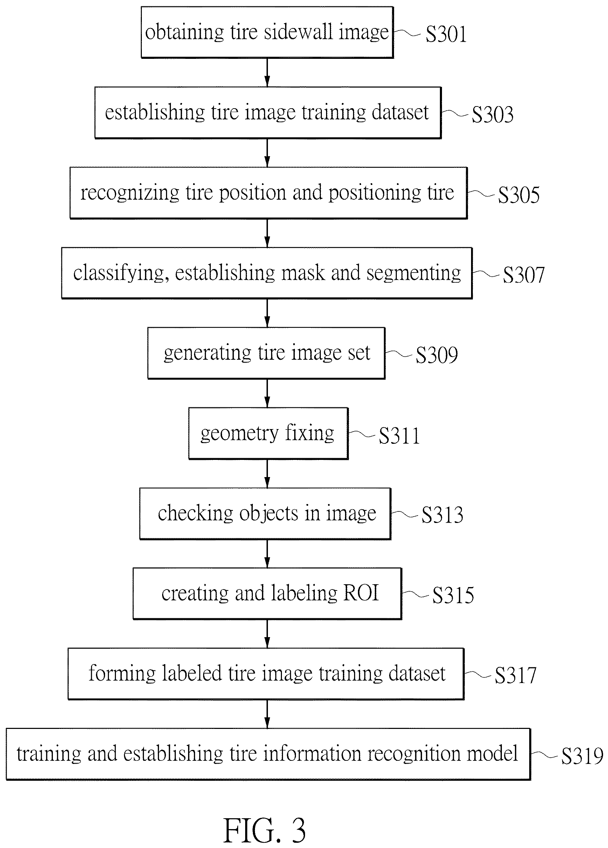

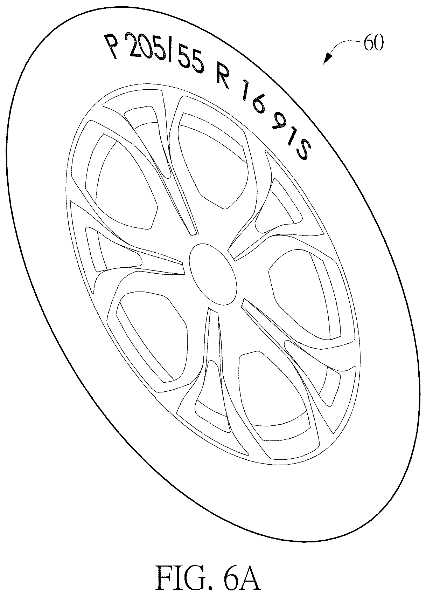

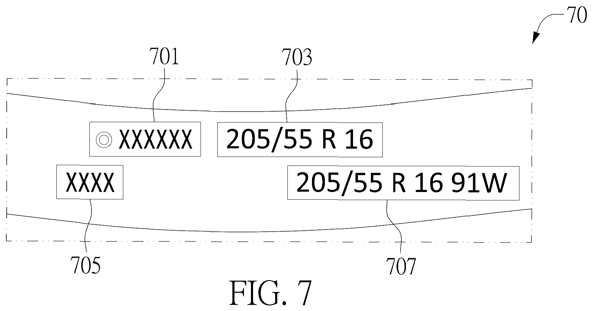

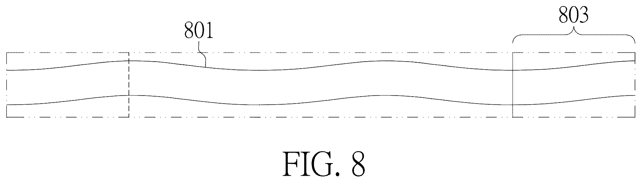

The flowchart shown in Fig. 3 can be referenced for the process of the method for establishing a tire information recognition model according to one embodiment of the present invention. In the meantime, reference is made to Fig. 5, which is a schematic diagram depicting tire specifications in one example. Fig. 6A to Fig. 6D are schematic diagrams depicting a tire segmented from images according to one embodiment of the present invention. Fig. 7 is a schematic diagram depicting a strip-shaped tire image obtained from tire images through geometric fixing according to one embodiment of the present invention. Fig. 8 is one further schematic diagram depicting the strip-shaped tire image in one further embodiment of the present invention.

In the method for establishing the tire information recognition model, a lot of images under recognition of tires with side surfaces are firstly obtained (step S301). The images under recognition include part of or entire tire side surface captured from various angles of views, and the images under recognition are used to create a tire image training dataset (step S303).

It should be noted that, when using an electronic device to take images of various types of tires under recognition, it is difficult to specify a shooting angle, a shooting position, and a size for the tires of various vehicles when capturing images of the tires of the various vehicles in various environments. Most of the tire images in the tire image training dataset that is initially created are not perfect circles and required correction.

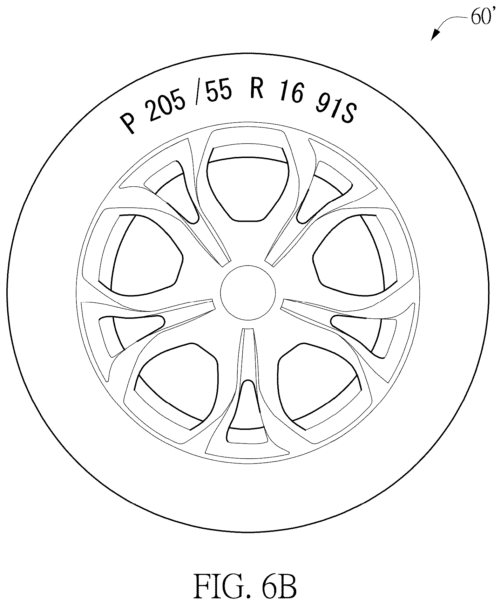

In one of the embodiments of the present invention, reference is made to Fig. 6A, which is a schematic diagram showing a tire image 60 captured by an electronic device. The tire image 60 is elliptically deformed due to a shooting angle of the electronic device. Therefore, after the tire image 60 is generated, the tire image 60 can be corrected by distortion correction. Fig. 6B schematically shows a corrected tire image 60'. Next, an intelligent model or an optical character recognition technology can be used to recognize a position of the tire in each of the images under recognition and then position the tire (step S305).

In the process of recognizing the tire in the image under recognition, a getPerspectiveTransform function that uses a transformation matrix can be used to transform a perspective image to a target image according to pixel information of the image. The target image can be used in subsequent steps so as to acquire clear inscriptions on a side surface of the tire.

Next, the tire can be classified according to pixel features of the tire in the image under recognition. Afterwards, masks of the appearances of the tires in the multiple images are established, and the masks can be used to segment the tires from the images under recognition (step S307), so that a large number of tire images segmented from the images under recognition can be collected so as to generate a tire image set (step S309).

In certain embodiments of the present invention, in the process of acquiring the tire images from the images under recognition, a segmentation model applying an instance segmentation technology is used to perform image segmentation on the images under recognition so as to outline a contour of the tire in each of the images under recognition. After that, the objects in the image can be recognized and labeled, and a confidence score that the object is a target object is calculated. Accordingly, the segmentation model is applied to identify the tire in the image under recognition and segment a tire image from the image under recognition by, for example, subtracting a background image such as removing a wheel rim image, a vehicle body image, and an environmental image from the image.

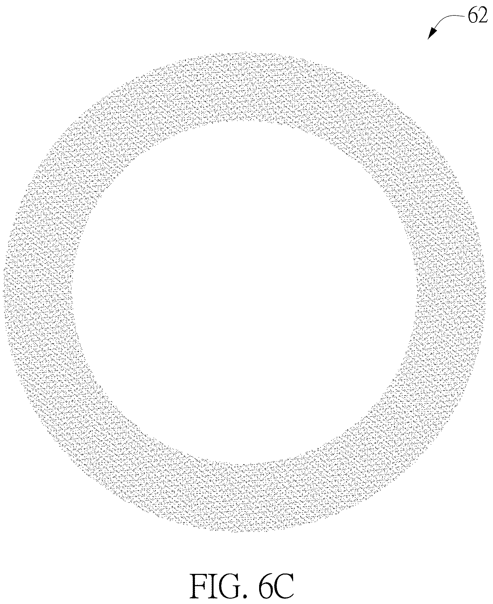

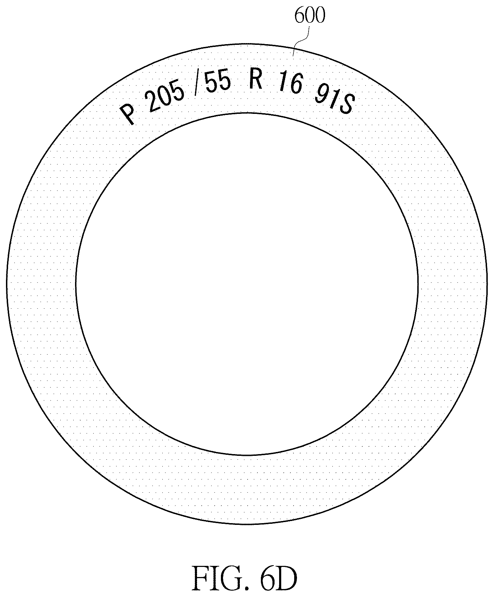

In one further embodiment of the present invention, in the step of segmenting the tire from the image, a you only look once (YOLO) segmentation model or an OpenCV (Open Computer Vision Library) algorithm can be used to position the tire in the image under recognition. The YOLO segmentation model classifies each of the pixels of the image, and recognizes and labels any object (i.e., the tire) in the image. Further, a mask with respect to the object to be labeled is established, as shown in Fig. 6C, which is a schematic diagram depicting a mask 62 with respect to the corrected tire image 60' shown in Fig. 6B. After that, the mask 62 is used to segment the tire image from the image under recognition through an image processing process. Reference is made to Fig. 6D, which is a schematic diagram depicting a segmented tire image 600 in one embodiment of the present invention.

Next, the segmentation model is used to generate the segmented tire image 600. The segmented tire image 600 is then corrected by geometry fixing and processed by an image unwrapping process. For example, a warpPolar function in an OpenCV algorithm is used to position the segmented tire image 600 and a polar coordinate transformation is applied to transform a concentric circular tire image into a linear strip-shaped tire image. Reference is made to a schematic diagram shown in Fig. 7, in which a tire image is corrected through geometry fixing and the side surface of the tire image in each of the images can be expanded to form a strip-shaped tire image 70 (step S311).

It should be noted that, after the strip-shaped tire image is obtained through geometry fixing, some positions to be segmented from the strip-shaped tire image are required to be determined and additional extensions may be made at both ends of the strip-shaped tire image for preventing the recognition result from being affected due to possible separation of the texts or the brand pattern when they are recognized. More specifically, so as to not lose any tire information when cutting the strip-shaped tire image, one of the embodiments is to duplicate a certain proportional length of any of the two ends of the strip-shaped tire image to the other end.

Reference is made to Fig. 8, which is a schematic diagram depicting a duplicate image of about a quarter (e.g., 25% referring to a dotted line) of a left end of a strip-shaped tire image 801, which forms a duplicate image segment 803, being copied to a right end of the strip-shaped tire image 801. Therefore, the information to be recognized in the strip-shaped tire image 801 can be kept complete without being separated. The strip-shaped tire image 801 added with the duplicate image segment 803 forms an image for subsequent steps to detect objects and label the regions of interest.

An object detection model is used to detect objects in each image of the corrected tire image set with respect to the segmented tire images (step S313). The image characteristics of the tire information are referred to for labeling and creating multiple regions of interest (ROI) (step S315). The ROIs to be labeled on the side surface of the tire include any of or any combination of a brand region, a service type region, a section width region, an aspect ratio region, a construction region, and a tire specification region so as to form a labeled tire image training dataset (step S317).

In an exemplary example, reference is made to Fig. 7, which is a schematic diagram depicting a strip-shaped tire image 70 that is obtained from the tire image through geometry fixing according to one embodiment of the present invention. Multiple ROIs 701, 703, 705, and 707 are labeled on the strip-shaped tire image 70 after object detection. For example, the ROI 701 is such as a brand region composed of texts and patterns, the ROI 703 is such as a tire specification region (205/55 R 16), the ROI 705 is such as a U.S. Department of Transportation region (XXXX), and the ROI 707 is such as another tire specification region (205/55 R 16 91W).

According to one embodiment of the present invention, a region detection process is performed based on the image characteristics of the information shown on the side surface of the tire. Specifically, the YOLO segmentation model is applied to detect objects in the strip-shaped tire image that has been corrected and adjusted, and classify the pixels based on the image characteristics. As compared to the tire specifications schematically shown in Fig. 5, the ROIs to be labeled include a service type region 501, a section width region 503, an aspect ratio region 505, a construction region (e.g., R: radial and B: bias) 507, a tire specification region (e.g., rim diameter) 509, a load index region 511, and a speed rating region 513. In addition, the ROIs also include a brand region which is composed of texts and patterns and a U.S. Department of Transportation region.

After that above steps for object detection and ROI labeling, the labeled tire image training dataset including the ROIs of the tire image is obtained. The labeled tire image training dataset is provided for training the object detection model such as the YOLO object detection model so as to establish the tire information recognition model (step S319).

It should be noted that, in the flowchart of the method for establishing a tire information recognition model shown in Fig. 3, the tire information recognition system adopts a two-layer model architecture that includes an object detection model and a classification recognition model. The object detection model is used to perform target detection, instance segmentation, and image classification so as to perform text recognition on the labeled ROIs and label characters therein. The tire information recognition model having functions of object detection and optical character recognition is established by training the object detection model. Further, the classification recognition model is used to recognize a tire brand in the brand region on the side surface of the tire. The labeled tire image training dataset can therefore include tire brand information. Accordingly, the tire information recognition model having function of tire brand recognition can be established by training the object detection model.

In an exemplary example, a two-layer model framework is such as a two-layer YOLO model framework, in which a first layer YOLO model is used to position the ROIs and a second layer YOLO model is used to recognize the texts and patterns in the ROIs so as to identify the objects (e.g., the brand) in the tire image. A classification model (e.g., ResNet) can be used to classify and recognize the objects. For example, the brand is usually represented by a logo pattern that generally has fixed appearance characteristics and therefore the classification model can accurately recognize the brand.

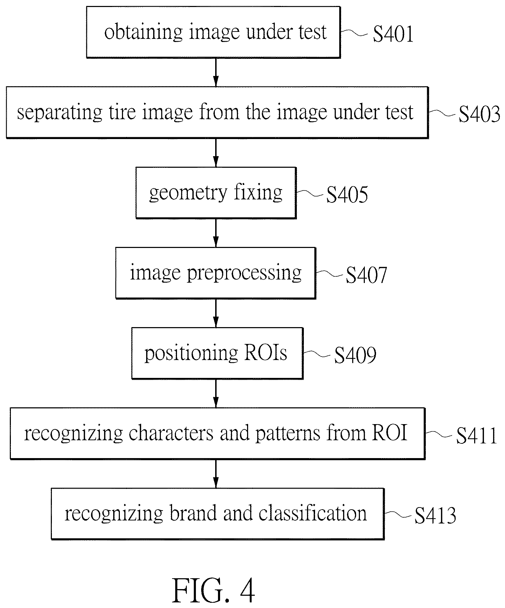

Next, the tire information recognition model is used to recognize the tire information, and reference is made to Fig. 4, which is a flowchart illustrating the tire information recognition method according to one embodiment of the present invention.

In beginning, a camera of an electronic device is used to capture an image under text that covers part of or entire tire under recognition. After tire information of the image under recognition is recognized (step S401), the segmentation model is applied to segment a tire image from the image under recognition, such as the segmented tire image 600 shown in Fig. 6D (step S403). After performing geometry fixing (or including polar coordinate transformation) on the tire image, the tire image is expanded to an identifiable strip-shaped tire image, such as the strip-shaped tire image 70 shown in Fig. 7 or the image that combines the strip-shaped tire image 801 and the duplicate image segment 803 (step S405). Next, the strip-shaped tire image is pre-processed, e.g., enhancing brightness and contrast of the image (step S407), and multiple regions of interest on the side surface of the tire under recognition in the strip-shaped tire image can be positioned, such as the ROIs 701, 703, 705 and 707 shown in Fig. 7 (step S409).

Further, the tire information recognition model is used to recognize the texts and patterns in the ROIs (step S411), so that the brand and class of the tire can be recognized, and the specifications of the tire under recognition can be obtained (step S413). The tire information recognition model is used to recognize the multiple ROIs on the side surface of the tire under recognition so as to obtain one or any combination of the brand region, the service type region, the section width region, the aspect ratio region, the construction region, and the tire specification region.

In conclusion, according to the above embodiments of the method for establishing a tire information recognition model, the tire information recognition method and the tire information recognition system, rather than the conventional method of manually determining tire specifications based on information on the tire side surface, the methods apply deep-learning algorithm to learn the specification information in a large number of tire images so as to establish an intelligent model used to recognize the tire specifications. Accordingly, accuracy and reliability of tire information recognition can be enhanced.

The foregoing description of the exemplary embodiments of the invention has been presented only for the purposes of illustration and description and is not intended to be exhaustive or to limit the invention to the precise forms disclosed. Many modifications and variations are possible in light of the above teaching.

The embodiments were chosen and described in order to explain the principles of the invention and their practical application so as to enable others skilled in the art to utilize the invention and various embodiments and with various modifications as are suited to the particular use contemplated.

## Claims

1. A method for establishing a tire information recognition model, **characterized in that** the method comprises:
capturing multiple images of various angles of views of side surfaces of tires (200) so as to create a tire image training dataset, wherein each of the multiple images covers a part of or a whole of a side surface of each of the tires (200);
recognizing a position of each of the tires (200) from the multiple images, using a segmentation model to position each of the tires (200), classifying the tires (200) according to pixel features of the tires (200), and segmenting the tires (200) from the multiple images by masks (62) being created for the multiple images so as to generate a tire image set;
performing geometry fixing on the tire image set so as to form a corrected tire image set comprising the side surfaces of the tires (200);
using an object detection model to detect objects in each of the images of the corrected tire image set and creating multiple regions of interest of each of the images; and
labeling the multiple regions of interest of each of the images so as to form a labeled tire image training dataset and applying the labeled tire image training dataset to train the object detection model for obtaining the tire information recognition model.

2. The method according to claim 1, wherein, after performing the geometry fixing on the tire image set, the corrected tire image set comprises a strip-shaped tire image (70) formed by expanding a tire image (60) in each of the images is formed.

3. The method according to claim 2, wherein a polar coordinate transformation is applied to convert a concentric circular tire image that is obtained through image segmentation (194) into the strip-shaped tire image.

4. The method according to claim 2, wherein, after the strip-shaped tire image (70) is created, a specified length ratio of one end of the strip-shaped tire image (70) is additionally copied to another end of the strip-shaped tire image.

5. The method according to any of claims 1 to 4, wherein the object detection model is used to detect the corrected tire image set for creating the multiple regions of interest of each of the images, and labeling one or any combination of a brand region, a service type region (501), a section width region (503), an aspect ratio region (505), a construction region (507), and a tire specification region (509).

6. The method according to claim 5, wherein the object detection model performs target detection, instance segmentation, and image classification for recognizing texts in the multiple regions of interest, labels characters and trains the object detection model to establish the tire information recognition model having functions of object detection and optical character recognition.

7. The method according to claim 6, wherein a classification recognition model is used to recognize a brand of a tire (200) in the brand region on the side surface of the tire (200) and allow the labeled tire image training dataset to comprise tire brand information so as to establish the tire information recognition model having a function of tire brand recognition by training the object detection model.

8. A tire information recognition method performed by a tire information recognition model that is established by the method for establishing a tire information recognition model according to claim 1, **characterized in that** the tire information recognition method comprises:
obtaining an image under recognition that covers a part of or a whole of a tire under recognition;
using the segmentation model to separate a tire image (60) from the image under recognition, performing the geometry fixing on the tire image (60), and expanding the tire image (60) to be an identifiable strip-shaped tire image;
pre-processing the identifiable strip-shaped tire image, positioning multiple regions of interest on a side surface of the tire under recognition of the identifiable strip-shaped tire image, and using the tire information recognition model to recognize texts and patterns within the multiple regions of interest on the side surface of the tire under recognition; and
using the tire information recognition model to recognize and classify a brand based on the texts and the patterns on the side surface of the tire under recognition so as to obtain specifications of the tire under recognition.

9. The tire information recognition method according to claim 8, wherein, after performing the geometry fixing on the tire image set, the corrected tire image set comprises the identifiable strip-shaped tire image (70) formed by expanding a tire image (60) in each of the images is formed.

10. The tire information recognition method according to claim 9, wherein a polar coordinate transformation is applied to convert a concentric circular tire image that is obtained through image segmentation (194) into the identifiable strip-shaped tire image.

11. The tire information recognition method according to claim 9, wherein, after the identifiable strip-shaped tire image (70) is created, a specified length ratio of one end of the identifiable strip-shaped tire image (70) is additionally copied to another end of the identifiable strip-shaped tire image.

12. The tire information recognition method according to any of claims 8 to 11, wherein the tire information recognition model is used to recognize the multiple regions of interest on the side surface of the tire under recognition so as to obtain one or any combination of a brand region, a service type region (501), a section width region (503), an aspect ratio region (505), a construction region (507), and a tire specification region (509).

13. A tire information recognition system (100), **characterized in that** the system comprises:
a computer system, comprising a processor (101), a camera and a non-transitory computer-readable medium, executing by the processor (101) an instruction set stored in the non-transitory computer-readable medium for performing a tire information recognition method by a tire information recognition model that is established by the method for establishing a tire information recognition model according to claim 1, wherein the tire information recognition method comprises:
obtaining an image under recognition, captured by the camera, that covers a part of or a whole of a tire under recognition;
using the segmentation model to separate a tire image (60) from the image under recognition, performing the geometry fixing on the tire image (60), and expanding the tire image (60) to be an identifiable strip-shaped tire image;
pre-processing the identifiable strip-shaped tire image, positioning multiple regions of interest on a side surface of the tire under recognition of the identifiable strip-shaped tire image, and using the tire information recognition model to recognize texts and patterns within the multiple regions of interest on the side surface of the tire under recognition; and
using the tire information recognition model to recognize and classify a brand based on the texts and the patterns on the side surface of the tire under recognition so as to obtain specifications of the tire under recognition.

14. The tire information recognition system (100) according to claim 13, wherein the computer system is operated in an electronic device (20) and the camera of the electronic device (20) is used to capture an image under recognition, and specifications of the tire under recognition are displayed on a display screen after tire information of the tire under recognition is recognized.

15. The tire information recognition system (100) according to claim 13 or claim 14, wherein the tire information recognition model is used to recognize the multiple regions of interest on the side surface of the tire under recognition so as to obtain one or any combination of a brand region, a service type region (501), a section width region (503), an aspect ratio region (505), a construction region (507), and a tire specification region (509).
